# EUROPÄISCHE PATENTSCHRIFT

(11) **EP 1 025 408 B1**
(45) Veröffentlichungstag und Bekanntmachung des Hinweises auf die Patenterteilung: **24.03.2004**
(21) Anmeldenummer: 98965634.3
(22) Anmeldetag: 16.10.1998
(51) Int. Cl.: F25D 23/06

(54) **WÄRMEISOLIERENDE WANDUNG**
HEAT-INSULATING WALLS
PAROIS D'ISOLATION THERMIQUE

(30) Priorität: 16.10.1997 DE 19745825
(43) Veröffentlichungstag der Anmeldung: 09.08.2000
(73) Patentinhaber: BSH Bosch und Siemens Hausgeräte GmbH, 81739 München (DE)
(72) Erfinder: HIRATH, Jürgen, D-89522 Heidenheim (DE); SCHÜTTE, Markus, D-90409 Nürnberg (DE)
(86) Internationale Anmeldenummer: PCT/EP1998/006601
(87) Internationale Veröffentlichungsnummer: WO 1999/019678

(56) Entgegenhaltungen:
- DE-A- 19 520 020
- GB-A- 890 372
- US-A- 2 000 882
- US-A- 3 380 615

## Beschreibung

Die Erfindung betrifft eine wärmeisolierende Wandung mit zwei im Abstand zueinander angeordneten, zumindest weitestgehend vakuumdicht ausgebildeten Deckschichten, welche zusammen mit einem zumindest weitestgehend vakuumdichten Verbindungselement einen evakuierbaren Zwischenraum umschließen, welcher mit evakuierbarem Wärmeisolationsmaterial verfüllt ist, wobei das Verbindungselement an entlang der freien Kanten der Deckschichten vorgesehenen und vom Zwischenraum weggerichteten Abwinklungen aufliegt und vakuumdicht festgesetzt ist.

Eine derartige wärmeisolierende Wandung ist aus der GB-A 890 372 bekannt.

Darüber hinaus ist es bei wärmeisolierenden Wandungen, basierend auf Vakuumisolationstechnik Stand der Technik, dass die zueinander beabstandeten äußeren Deckschichten durch ein im Querschnitt im wesentlichen U-förmig ausgebildetes Verbindungsprofil vakuumdicht miteinander verbunden sind, wobei das Verbindungsprofil derart zwischen die Deckschichten eingefügt ist, dass deren freie Schenkelenden den Kanten der Deckschichten zugewandt sind und mit diesen weitestgehend bündig abschließen. Bei dieser Verbindungsart der beiden Deckschichten ist es zwangsläufig erforderlich, die Basis des Verbindungsprofils mit einer Materialstärke auszustatten, welche in der Größenordnung der Deckschichten liegen muss, um eine ausreichende Steifigkeit für die fertigungsbedingt notwendigen Spannkräfte zu erreichen, welche ausschließlich außerhalb des Isolationsraums wegen dessen fehlender Zugänglichkeit auf die wärmeisolierende Wandung eingeleitet werden müssen. Infolge der Materialstärkeanhebung im Bereich der Basis des Verbindungsprofils entsteht bei der Verwendung von kostengünstigen, in den Zwischenraum zwischen den Deckschichten einzubringenden, als Stütz- und Isoliermaterial dienenden Wärmeisolationsmaterialien, wie offenzelliger Polyurethanschaum oder offenzelliger Polystyrolschaum oder dgl., eine Wärmebrücke, welche die Isolationsfähigkeit einer wärmeisolierenden Wandung erheblich beeinträchtigt. Um diese Beeinträchtigung zu vermeiden, werden die bekannten Wandungen mit kostenträchtigen Glasfaserwerkstoffen verfüllt, welche zudem noch aufgrund ihres relativ hohen spezifischen Gewichtes eine deutliche Gewichtszunahme für die Wandungen bedeuten, wodurch deren Handhabung in der Fertigung aber auch für den Fall, dass diese bspw. bei einem Kühlgerät, wie einem Haushalts-, Kühl- oder Gefrierschrank zum Einsatz kommen, die Mobilität dieser deutlich erschwert ist.

Der Erfindung liegt die Aufgabe zugrunde, eine wärmeisolierende Wandung gemäß dem Oberbegriff des Anspruches 1 mit einfachen konstruktiven Maßnahmen zu verbessern.

Diese Aufgabe wird gemäß der Erfindung dadurch gelöst, dass das Verbindungselement an der Auflagefläche der Abwinklungen vakuumdicht festgesetzt ist.

Bei einer derartigen Aufbautechnik können ausnahmslos Einzelteile einfacher Geometrie in Form von ebenflächigen, kostengünstig herzustellenden Blechabschnitten zum Einsatz kommen. Ferner sind die mit Spannwerkzeugen gegeneinander zu verspannenden Abschnitte an den Deckschichten und dem Verbindungselement frei zugänglich, so dass einerseits einfachste Spannwerkzeuge aufgrund der guten Zugänglichkeit der Spannstellen zum Einsatz kommen können und andererseits ein mit einer folienartigen Wandstärke ausgestattetes Verbindungselement Anwendung finden kann, da dieses nicht mehr dazu dienen muss, irgendwelche Spannkräfte aufnehmen zu müssen. Durch den Einsatz eines mit folienartiger Wandstärke ausgestatteten Verbindungselementes ergibt sich die Möglichkeit, den Zwischenraum zwischen den Deckschichten mit kostengünstigem Wärmeisolationsmaterial, wie beispielsweise offenzelligem Polyurethanschaum oder offenzelligem Polystyrolschaum zu verfüllen, ohne die Wärmeisolationseigenschaften dadurch zu beeinträchtigen, da das folienartige Verbindungselement bei der Anwendung dieser Wärmeisolationsmaterialien nur eine vernachlässigbare Wärmebrücke darstellt.

Nach einer bevorzugten Ausführungsform des Gegenstandes der Erfindung ist vorgesehen, dass das Verbindungselement als Flachprofil mit zwei zumindest im wesentlichen die Breite und die Materialstärke der Abwinklungen aufweisenden Randstreifen ausgebildet ist, zwischen welchen ein zumindest den Zwischenraum überbrückendes folienartiges Zwischenstück angeordnet ist.

Durch Randstreifen, deren Materialstärke im Bereich der Abwinklungen liegt, lässt sich das z.B. aus Edelstahl oder Stahlblech gefertigte Verbindungselement besonders sicher und rasch schweißtechnisch, beispielsweise an aus Edelstahl oder Stahlblech gefertigten Deckschichten mit hoher Prozess-Sicherheit befestigen, wobei gleichzeitig durch das folienartige Zwischenstück eine Abdeckung des Zwischenraums zwischen den Deckschichten mit minimaler Wärmeleitung geschaffen ist.

Gemäß einer weiteren bevorzugten Ausführungsform des Gegenstandes der Erfindung ist vorgesehen, dass das folienartige Zwischenstück mit seinen seitlichen Abschnitten als Zwischenlage zwischen den Randstreifen und den Abwinklungen an den Deckschichten vakuumdicht festgesetzt ist.

Hierdurch ergeben sich besonders einfach und kostengünstig herzustellende Einzelteile, welche sich zudem noch besonders funktionssicher zusammenfügen und besonders prozesssicher miteinander verbinden lassen.

Sowohl besonders prozesssicher als auch besonders kostengünstig ist die vakuumdichte Befestigung der Zwischenlage herstellbar, wenn nach einer nächsten vorteilhaften Ausgestaltung des Gegenstandes der Erfindung vorgesehen ist, dass die vakuumdichte Befestigung der Zwischenlage schweißtechnisch bewirkt ist.

Fertigungstechnisch besonders einfach herzustellen und besonders einfach handhabbar ist das Verbindungselement, wenn nach einer weiteren bevorzugten Ausführungsform des Gegenstandes der Erfindung vorgesehen ist, dass das Verbindungselement aus mehreren Längsteilstücken zusammengefügt ist.

Entsprechend einer nächsten bevorzugten Ausführungsform des Gegenstandes der Erfindung ist vorgesehen, dass die Längsteilstücke über die Eckbereiche der Wandungen einstückig und stoßfrei geführt sind.

Hierdurch sind potentielle Dichtheitsprobleme der Vakuumisolierung durch sich in den Eckbereichen anhäufende Verbindungsstellen, z.B. in Form von Schweißnahtanhäufungen bei aus Edelstahl oder Stahlblech gefertigten Deckschichten und Verbindungselementen entschärft. Darüber hinaus ist durch die einstückigen Eckprofile sichergestellt, dass die gewünschte und aus funktionstechnischen Gründen geforderte Geometrie stets sicher eingehalten wird, da die Eckprofile beispielsweise als vorgeformte oder vorgefertigte Bauelemente zum Einsatz kommen können und die Ausbildung der Ecke an den wärmeisolierenden Wandungen nicht durch erst im Fertigungsverfahren zusammenzufügende Profilabschnitte bewerkstelligt werden muss. Außerdem lassen sich durch die einstückigen Eckprofile unterschiedliche Eckgestaltungen herbeiführen, wie beispielsweise Rundecken, welche beim Verschweißen der Deckschichten mit dem Verbindungsprofil einen durchgehenden, ohne Unterbrechung ablaufenden, kontinuierlich und somit prozesssicheren Schweißvorgang ermöglichen.

Gemäß einer weiteren bevorzugten Ausführungsform des Gegenstandes der Erfindung ist vorgesehen, dass die Längsteilstücke an ihren Fügestellen untereinander jeweils durch ein an den Deckschichten vakuumdicht festgesetztes Abstützelement abgestützt sind.

Durch die Einbringung derartiger Abstützelemente, deren Wandstärke beispielsweise in der Größenordnung der Materialstärke der Deckflächen liegt, lassen sich die Längsteilstücke besonders einfach und rasch zueinander und zu den Deckschichten justieren, wodurch der Fertigungsablauf nicht unerheblich beschleunigt ist. Darüber hinaus vermögen die Abstützelemente gegebenenfalls auch herstellungsbedingt aufzubringende Spannkräfte aufzunehmen.

Nach einer nächsten bevorzugten Ausführungsform des Gegenstandes der Erfindung ist vorgesehen, dass die Längsteilstücke an ihren Fügestellen untereinander jeweils von einem Abdeckelement abgedeckt sind, welches mit den Deckschichten und dem Abstützelement vakuumdicht verbunden ist.

Durch die Verwendung von Abdeckelementen an den Stoßstellen zwischen den aneinandergefügten Längsteilstücken sind diese besonders zielsicher und fertigungsfreundlich miteinander zu einem vakuumdichten Verbindungselement verbindbar, wobei durch eine vakuumdichte Verbindung des Abdeckelementes mit den an den Deckschichten vakuumdicht festgesetzten Abstützelementen ein vakuumdichter Verbund auch dann erzeugt ist, wenn zwischen den aneinandergefügten Längsteilstücken, bedingt durch deren Herstelltoleranzen, unterschiedlich breite Stoßspalte entstehen.

Besonders prozesssicher und großserientechnisch herstellbar sind die wärmeisolierenden Wandungen, wenn nach einer nächsten vorteilhaften Ausgestaltung des Gegenstandes der Erfindung vorgesehen ist, dass die Deckschichten, das Verbindungselement, das Abstützelement und das Abdeckelement aus verschweißbaren, metallischen Werkstoffen gebildet sind.

Ein besonders umweltfreundliches, mit hohem Wärmeisolationsvermögen ausgestattetes Kältegerät mit einem wärmeisolierenden Gehäuse und einem darin angeordneten, von einer wärmeisolierenden Tür verschließbaren Nutzraum ist erzeugbar, wenn gemäß einer nächsten bevorzugten Ausführungsform des Gegenstandes der Erfindung vorgesehen ist, dass das wärmeisolierende Gehäuse und die Tür nach einem der Ansprüche 1 bis 9 ausgebildet sind. Durch das hohe Wärmeisolationsvermögen lässt sich zudem die Wandungsdicke des wärmeisolierenden Gehäuses verkleinern und dadurch das Nutzvolumen des Kühl- oder Gefrierraumes bei gleichbleibenden Außenabmessungen vergrößern.

Ebenso besonders umweltschonend mit einem relativ hohen Wärmeisolationsvermögen und einem erhöhten Nutzinhalt bei gleichbleibenden Außenabmessungen herstellbar ist eine Herdmuffel für einen Haushaltsherd mit einer wärmeisolierend ausgebildeten, von einer Tür verschließbaren Herdmuffel, wenn gemäß einer letzten bevorzugten Ausführungsform des Gegenstandes der Erfindung vorgesehen ist, dass die Herdmuffel nach einem der Ansprüche 1 bis 9 ausgebildet ist.

Die Erfindung ist in der nachfolgenden Beschreibung am Beispiel eines Kühlgerätegehäuses näher erläutert.

Es zeigen:
- Fig. 1: ein vakuumisoliertes Gehäuse eines Haushalts-Kühlgerätes, dessen als Gehäusewände dienende, zueinander beabstandete Deckschichten an ihren freien Rändern auf der Seite der Zugangsöffnung des Gerätes mit einem Verbindungselement verbunden sind, in raumbildlicher Ansicht von der Seite und

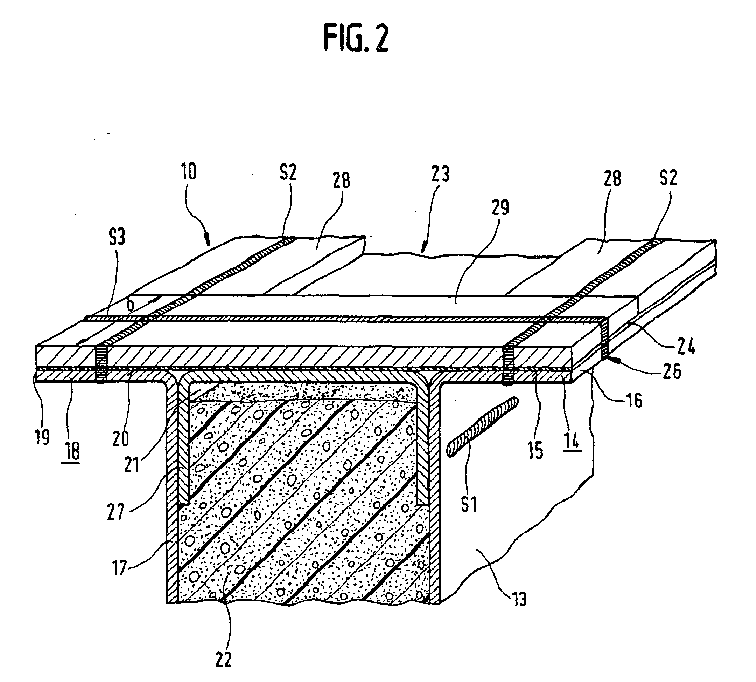

- Fig. 2: ausschnittsweise eine Wand des Gehäuses, in einer gegenüber Fig. 1 vergrößerten Darstellung, geschnitten gemäß der Schnittlinie II-II.

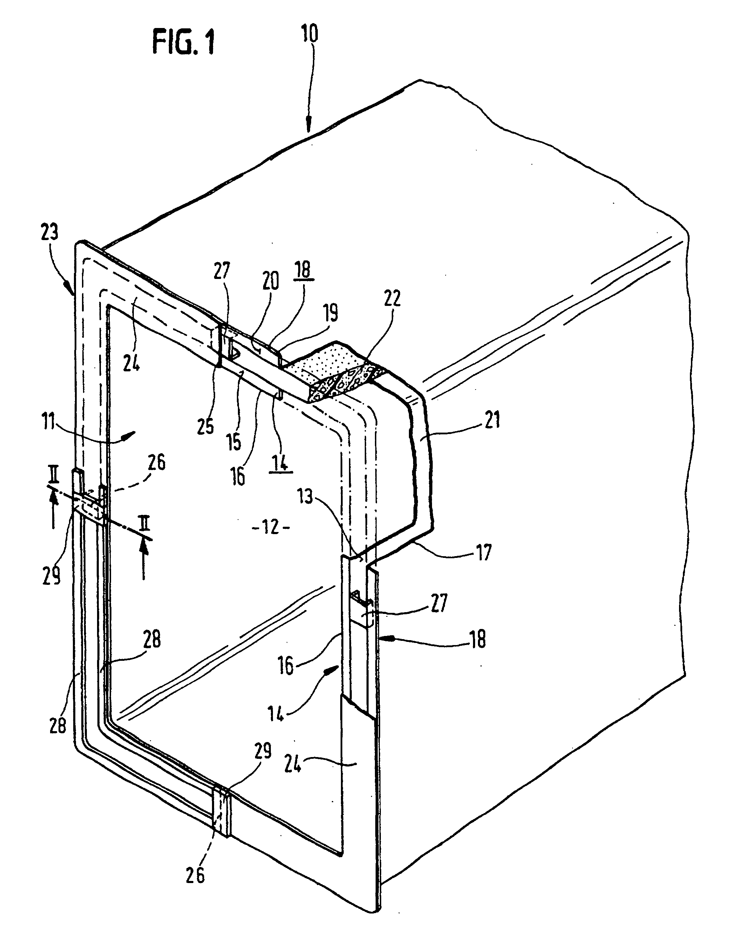

Fig. 1 zeigt in vereinfachter, schematischer Darstellung ein für ein Haushalts-Kältegerät, wie einen Haushalts-Kühl- oder Gefrierschrank verwendbares wärmeisolierendes Gehäuse 10, welches einen über eine Zugangsöffnung 11 zugänglichen, als Kühl- oder Gefrierraum ausgebildeten Lagerraum 12 aufweist. Dieser ist mit einer als Innenverkleidung dienenden inneren Deckschicht 13 ausgekleidet, welcher als Rohrkörper ausgebildet ist und beispielsweise aus Edelstahlblech oder korrosionsgeschütztem Stahlblech mit beispielsweise 0,4 mm Materialstärke besteht. Die innere Deckschicht 13 ist an ihrem der Zugangsöffnung 11 zugewandten Endabschnitt mit einer im wesentlichen senkrecht zur inneren Deckschicht 13 angeordneten Abwinklung 14 versehen, deren vom Lagerraum 12 abgewandte Außenseite als Auflagefläche 15 dient, deren freier Rand 16 den freien Öffnungsquerschnitt der Zugangsöffnung 11 begrenzt. Die innere Deckschicht 13 ist von einer als Außenverkleidung des Gehäuses 10 dienenden äußeren Deckschicht 17 ummantelt, deren Wandungen im Abstand zu den Wandungen der Deckschicht 13 angeordnet sind, so dass die beiden Deckschichten 13 und 17 wie zwei ineinander gesteckte Rohre zusammengefügt sind. Die äußere Deckschicht 17 ist an ihrem der Zugangsöffnung 11 zugewandten Endabschnitt mit einer durch spanlose Verformung der Deckschicht 17 erzeugten Abwinklung 18 versehen, deren freier Rand 19 von der Deckschicht 13 abgewandt ist und deren Außenseite wie die der Abwinklung 14 als Auflagefläche 20 dient, welche wie die der Deckschicht 13 im wesentlichen senkrecht zur Oberfläche der Deckschicht 17 angeordnet ist und im wesentlichen höhengleich zur Auflagefläche 15 an der inneren Deckschicht 13 verläuft. Zwischen der Deckschicht 13 und der diese mantelartig umgebenden äußeren Deckschicht 17 ist durch die gleichmäßige Beabstandung der Wandungen der letzteren Deckschicht von den Wandungen der Deckschicht 13 ein Zwischenraum 21 erzeugt, welcher mit evakuierbarem Wärmeisolationsmaterial 22, wie offenzelligem Polyurethanschaum oder offenzelligem Polystyrolschaum verfüllt ist und welcher auf seiner der Zugangsöffnung 11 gegenüberliegenden Rückseite mit nicht dargestellten Mitteln vakuumdicht verschlossen ist. Auf der Seite der Zugangsöffnung 11 ist der Zwischenraum 21 durch ein Verbindungselement 23 vakuumdicht abgeschlossen, welches entlang der Abwinklungen 14 bzw. 18 verläuft und mit seinen freien Rändern an deren Auflageflächen 15 bzw. 20 vakuumdicht festgesetzt ist. Das Verbindungselement 23 ist im wesentlichen flachprofilig ausgebildet und aus mehreren T eilstücken 24 zusammengefügt, welche sich über den Eckbereich des Gehäuses 10 einstückig und stoßfrei erstrecken und welche aus folienartigem Werkstoff, wie beispielsweise einer Edelstahlfolie mit 0,1 mm Materialstärke gefertigt sind. Die folienartigen Teilstücke 24, welche sich bis hin zu den freien Rändern der Abwinklung 14 bzw. 18 erstrecken, sind mit ihren Endabschnitten 25 unter Bildung einer Stoßstelle 26 aneinandergefügt, wobei die Endabschnitte 25 an der Stoßstelle 26 durch ein im Querschnitt U-profilartig ausgeführtes Abstützelement 27 abgestützt sind. Dieses ist beispielsweise aus einem im Materialstärkenbereich der Deckschichten 13 und 17 liegenden Edelstahlblech gefertigt und mit seinen Schenkeln an der dem Zwischenraum 21 zugewandten Innenseite der Deckschichten 13 und 17 vakuumdicht durch eine Schweißnaht S1 festgesetzt. Das Verbindungselement 23 umfasst neben seinen folienartigen Teilstücken 24 noch im Materialstärkenbereich der Deckschichten 13 und 17 liegende, im wesentlichen die Breite der Auflagefläche 15 bzw. 20 aufweisende Randstreifen 28, welche wie die Teilstücke 24 durchgehend einstückig über die Eckbereiche des Gehäuses 10 hinweggeführt sind und welche entlang der Auflagefläche 15 d urch e ine S chweißnaht S 2 vakuumdicht festgesetzt s ind, so d ass die folienartigen Teilstücke 24 als Zwischenlage zwischen der Abwinklung 14 bzw. 18 und den Randstreifen 28 angeordnet und durch die Schweißnaht S2 vakuumdicht mit der Deckschicht 13 bzw. 17 verbunden sind. Die Randstreifen 28 sind jeweils an der Stoßstelle 26 im wesentlichen um die halbe Breite b eines im Materialstärkenbereich der Deckschichten 13 und 17 liegendes, beispielsweise aus Edelstahlblech oder korrosionsgeschütztem Stahlblech gefertigtes Abdeckelement 29 verkürzt, welche die durch die Verkürzung der Randstreifen 28 gegenüber den Teilstücken 24 entstandene Lücke auszufüllen vermag. Das Abdeckelement 29, welches im wesentlichen bündig mit den freien Rändern der Abwinklungen 14 und 18 abschließt, dient zur vakuumdichten Abdeckung der Stoßstelle 26 der Endabschnitte 25. Zur Erzeugung des vakuumdichten Verbundes dient eine die Schweißnähte S2 kreuzende Schweißnaht S3, welche sich über die gesamte Länge des Abdeckelementes 29 erstreckt und welche das Abdeckelement 29 sowohl mit den Abwinklungen 14 und 18 als auch mit der Basis des U-förmig ausgebildeten Abstützelementes 27 vakuumdicht verbindet. Durch die an den Stoßstellen 26 der Teilstücke 24 zur Anwendung kommenden Abdeckelemente 29 in Verbindung mit den Randstreifen 28 und den folienartigen Teilstücken 24 sind die beiden Deckschichten bei einer minimierten Wärmeleitung zwischen ihnen vakuumdicht miteinander verbunden, so dass im Zusammenwirken mit den nicht dargestellten, rückseitig die beiden Deckschichten vakuumdicht miteinander verbindenden Mitteln der Zwischenraum 21 evakuierbar abgeschlossen ist.

In Abwandlung des vorliegenden Verbindungselementes 23 wäre es auch vorstellbar, die Randstreifen 28 durch mehrmaliges Umfalten der Längskanten der folienartigen Teilstücke 24 zu erzeugen.

Die im Beispiel eines wärmeisolierenden Gehäuses für ein Haushalts-Kühl- oder Gefriergerät beschriebene erfindungsgemäße, wärmeisolierende Wandung eignet sich auch zum Aufbau einer Tür eines Haushalts-Kältegerätes und zur Herstellung einer bei einem Haushaltsherd zum Einsatz kommenden wärmeisolierenden Herdmuffel, wobei im letzteren Einsatzfall voll das als Stützmaterial im evakuierten Zwischenraum dienende Wärmeisolationsmaterial auf die bei Herden üblicherweise auftretenden Betriebstemperaturen anzupassen wäre.

## Patentansprüche

1. Wärmeisolierende W andung (10) mit zwei im Abstand zueinander angeordneten, zumindest weitestgehend vakuumdicht ausgebildeten Deckschichten (13, 17), welche zusammen mit einem zumindest weitestgehend vakuumdichten Verbindungselement (23) einen evakuierbaren Zwischenraum (21) umschließen, welcher mit evakuierbarem Wärmeisolationsmaterial (22) verfüllt ist, wobei das Verbindungselement (23) an entlang der freien Kanten der Deckschichten (17, 13) vorgesehenen und an vom Zwischenraum (21) weggerichteten Abwinklungen (14, 18) aufliegt und vakuumdicht festgesetzt ist, **dadurch gekennzeichnet, dass** das Verbindungselement (23) an der Auflagefläche (15, 20) der Abwinklungen (14, 18) vakuumdicht festgesetzt ist.

2. Wärmeisolierende Wandung nach Anspruch 1, **dadurch gekennzeichnet, dass** das Verbindungselement (23) als Flachprofil mit zwei zumindest im wesentlichen die Breite und die Materialstärke der Abwinklungen (14, 18) aufweisenden Randstreifen (28) ausgebildet ist, zwischen welchen ein zumindest den Zwischenraum (21) überbrückendes folienartiges Zwischenstück (24) angeordnet ist.

3. Wärmeisolierende Wandung nach Anspruch 2, **dadurch gekennzeichnet, dass** das folienartige Zwischenstück (24) mit seinen seitlichen Abschnitten als Zwischenlage zwischen den Randstreifen (28) und den Abwinklungen (14, 18) an den Deckschichten (13, 17) vakuumdicht festgesetzt ist.

4. Wärmeisolierende Wandung nach Anspruch 3, **dadurch gekennzeichnet, dass** die vakuumdichte Befestigung der Zwischenlage (24) schweißtechnisch bewirkt ist.

5. Wärmeisolierende Wandung nach Anspruch 1 oder Anspruch 2, **dadurch gekennzeichnet, dass** das Verbindungselement (23) aus mehreren Teilstücken (24) zusammengefügt ist.

6. Wärmeisolierende Wandung nach einem der Ansprüche 1, 2 oder 5, **dadurch gekennzeichnet, dass** die Teilstücke (24) über die Eckbereiche der Deckschichten (13,17) einstückig und stoßfrei geführt sind.

7. Wärmeisolierende Wandung nach Anspruch 5 oder 6, **dadurch gekennzeichnet, dass** die Teilstücke (24) an ihren Fügestellen untereinander jeweils durch ein an den Deckschichten (13, 17) vakuumdicht festgesetztes Abstützelement (27) abgestützt sind.

8. Wärmeisolierende Wandung nach einem der Ansprüche 5 bis 7, **dadurch gekennzeichnet, dass** die Teilstücke (24) an ihren Fügestellen untereinander jeweils von einem Abdeckelement (29) abgedeckt sind, welches mit den Deckschichten (13, 17) und dem Abstützelement (27) vakuumdicht verbunden ist.

9. Wärmeisolierende Wandung nach einem der Ansprüche 1 bis 8, **dadurch gekennzeichnet, dass** die Deckschichten (13, 17), das Verbindungselement (23), das Abstützelement (27) und das Abdeckelement (29) aus verschweißbaren, metallischen Werkstoffen gebildet sind.

10. Kältegerät mit einem wärmeisolierenden Gehäuse und einem daran angeordneten, von einer wärmeisolierenden Tür verschließbaren Nutzraum, **dadurch gekennzeichnet, dass** das wärmeisolierende Gehäuse (10) und die Tür nach einem der Ansprüche 1 bis 9 ausgebildet sind.

11. Haushaltsherd mit einer wärmeisolierend ausgebildeten, von einer Tür verschließbaren Herdmuffel, **dadurch gekennzeichnet, dass** die Herdmuffel nach einem der Ansprüche 1 bis 9 ausgebildet ist.

## Claims

1. Thermally insulating wall (10) with two cover layers (13, 17), which are arranged at a spacing from one another and are formed to be at least substantially vacuum-tight and which together with an at least substantially vacuum-tight connecting element (23) enclose an evacuatable intermediate space (21) filled with an evacuatable thermal insulation material (22), wherein the connecting element (23) rests on and is vacuum-tightly fixed to angled portions (14, 18) provided along the free edges of the cover layers (17, 13) and directed away from the intermediate space (21), **characterised in that** the connecting element (23) is vacuum-tightly fixed to the support surface (15, 20) of the angled portions (14, 18).

2. Thermally insulating wall according to claim 1, **characterised in that** the connecting element (23) is constructed as a flat profile member with two edge strips (28), which have at least substantially the width and material thickness of the angled portions (14, 18) and between which a foil-like intermediate member (24) bridging over at least the intermediate space (21) is arranged.

3. Thermally insulating wall according to claim 2, **characterised in that** the foil-like intermediate member (24) is vacuum-tightly fixed by its lateral sections as intermediate layer between the edge strips (28) and the angled portions (14, 18) at the cover layers (13, 17).

4. Thermally insulating wall according to claim 3, **characterised in that** the vacuum-tight fastening of the intermediate layer (24) is produced by welding.

5. Thermally insulating wall according to claim 1 or claim 2, **characterised in that** the connecting element (23) is composed of several part members (24).

6. Thermally insulating wall according to one of claims 1, 2 and 5, **characterised in that** the part members (24) are led integrally and without butt joint over the corner regions of the cover layers (13, 17).

7. Thermally insulating wall according to claim 5 or 6, **characterised in that** the part members (24) are supported relative to one another at the joint locations thereof in each instance by a support element (27) vacuum-tightly fixed to the cover layers (13, 17).

8. Thermally insulating wall according to one of claims 5 to 7, **characterised in that** the part members (24) are covered relative to one another at the joint locations thereof in each instance by a cover element (29), which is vacuum-tightly connected with the cover layers (13, 17) and the support element (26).

9. Thermally insulating wall according to one of claims 1 to 8, **characterised in that** the cover layers (13, 17), the connecting element (23), the support element (27) and the cover element (29) are made of weldable, metallic materials.

10. Refrigerating appliance with a thermally insulating housing and a useful space arranged thereat and closable by a thermally insulating door, **characterised in that** the thermally insulating housing (10) and the door are constructed according to one of claims 1 to 9.

11. Domestic oven with an oven muffle which is constructed to be thermally insulating and which is closable by a door, **characterised in that** the oven muffle is constructed in accordance with one of claims 1 to 9.

## Revendications

1. Paroi (10) thermo-isolante avec deux couches de revêtement (13, 17) disposées à distance l'une de l'autre et réalisées de façon au moins très largement étanche au vide, qui entourent conjointement avec un élément de liaison (23) au moins très largement étanche au vide un espace intermédiaire (21) dont on peut faire le vide et qui est rempli de matériau thermo-isolant (22) dont on peut faire le vide, l'élément de liaison (23) reposant sur des parties coudées (14, 18) prévues le long des arêtes libres des couches de revêtement (17, 13) et dirigées à partir de l'espace intermédiaire (21), et étant fixé de façon étanche au vide, **caractérisée en ce que** l'élément de liaison (23) est fixé de façon étanche au vide sur la surface d'appui (15, 20) des parties coudées (14, 18).

2. Paroi thermo-isolante selon la revendication 1, **caractérisée en ce que** l'élément de liaison (23) est conçu comme un profilé plat avec deux bandes de bordure (28) présentant au moins sensiblement la largeur et l'épaisseur de matériau des parties coudées (14, 18), bandes entre lesquelles est disposée une pièce intermédiaire (24) du type film et surmontant au moins l'espace intermédiaire (21).

3. Paroi thermo-isolante selon la revendication 2, **caractérisée en ce que** la pièce intermédiaire (24) du type film est fixée de façon étanche au vide avec ses parties latérales comme couche intermédiaire entre les bandes de bordure (28) et les parties coudées (14, 18) sur les couches de revêtement (13, 17).

4. Paroi thermo-isolante selon la revendication 3, **caractérisée en ce que** la fixation étanche au vide de la couche intermédiaire est réalisée par soudure.

5. Paroi thermo-isolante selon la revendication 1 ou la revendication 2, **caractérisée en ce que** l'élément de liaison (23) est assemblé à partir de plusieurs tronçons (24).

6. Paroi thermo-isolante selon l'une quelconque des revendications 1, 2 ou 5, **caractérisée en ce que** les tronçons (24) sont disposés d'une seule pièce et sans jointure sur les zones d'angle des couches de revêtement (13, 17).

7. Paroi thermo-isolante selon la revendication 5 ou 6, **caractérisée en ce que** les tronçons (24) sont soutenus en leurs points d'assemblage entre eux respectivement par un élément de soutien (27) fixé de façon étanche au vide sur les couches de revêtement (13, 17).

8. Paroi thermo-isolante selon l'une quelconque des revendications 5 à 7, **caractérisée en ce que** les tronçons (24) sont recouverts en leurs points d'assemblage entre eux respectivement par un élément de recouvrement (29), qui est relié de façon étanche au vide aux couches de revêtement (13, 17) et à l'élément de soutien (27).

9. Paroi thermo-isolante selon l'une quelconque des revendications 1 à 8, **caractérisée en ce que** les couches de revêtement (13, 17), l'élément de liaison (23), l'élément de soutien (27) et l'élément de revêtement (29) sont formés à base de matériaux soudables et métalliques.

10. Appareil réfrigérant avec un carter thermo-isolant et un espace utile associé dessus et pouvant être fermé par une porte thermo-isolante, **caractérisé en ce que** le carter (10) thermo-isolant et la porte sont conçus selon l'une quelconque des revendications 1 à 9.

11. Cuisinière domestique équipée d'un moufle de cuisinière conçu de façon thermo-isolante et pouvant être fermé par une porte, **caractérisée en ce que** le moufle de cuisinière est conçu selon l'une quelconque des revendications 1 à 9.
